# EUROPÄISCHE PATENTSCHRIFT

(11) **EP 0 851 818 B1**
(45) Veröffentlichungstag und Bekanntmachung des Hinweises auf die Patenterteilung: **23.04.2003**
(21) Anmeldenummer: 96945467.7
(22) Anmeldetag: 19.09.1996
(51) Int. Cl.: B60R 21/16

(54) **VERFAHREN ZUR FALTUNG EINES GASSACKES UND VORRICHTUNG ZUR DURCHFÜHRUNG DES VERFAHRENS**
METHOD AND DEVICE FOR FOLDING AIR BAGS
PROCEDE ET DISPOSITIF DE PLIAGE D'AIRBAG

(30) Priorität: 22.09.1995 DE 19536625; 01.12.1995 DE 19546232
(43) Veröffentlichungstag der Anmeldung: 08.07.1998
(73) Patentinhaber: TAKATA - PETRI Aktiengesellschaft, 63743 Aschaffenburg (DE)
(72) Erfinder: DIETSCH, Andrea, D-13187 Berlin (DE)
(74) Vertreter: Bärmann, Klaus, Dipl.-Ing.
(86) Internationale Anmeldenummer: DE9601822
(87) Internationale Veröffentlichungsnummer: WO97012782

(56) Entgegenhaltungen:
- EP-A- 0 443 485
- GB-A- 2 279 046
- US-A- 5 162 035
- US-A- 5 360 387
- US-A- 5 391 137

## Beschreibung

Die Erfindung betrifft ein Verfahren zur Faltung eines Gassackes sowie eine Vorrichtung zur Durchführung des Verfahrens.

Um den Gassack eines Airbagmoduls in einem Lenkrad bzw. bei einem Beifahrerairbagmodul bzw. Seitenairbagmodul im Bereich der Armaturentafel bzw. Tür verstauen zu können, ist es erforderlich, diesen zu falten und in einen Behälter zu drücken, der dann verschlossen wird. Neben anderen Faltungsarten ist eine Faltungsart nach DE 44 22 276 A1 bekannt, bei der der Gassack Hauptfaltlinien aufweist, die zumindest zu einem Teil entlang geschlossener Bahnen um ein gedachtes Zentrum auf dem im wesentlichen leeren, ausgebreiteten Gassack verlaufen. Die Faltung bis zur erforderlichen Packungsdichte, die für das Verstauen des Gassackes im Lenkrad oder an der Armaturentafel erforderlich ist, erfolgt so, daß in einem ersten Schritt das Falten entlang der genannten Hauptfaltlinien erfolgt und daß dieser vorgefaltete Gassack anschließend über mindestens teilweise die Hauptfaltlinien kreuzenden Nebenfaltlinien auf die gewünschte Endform gefaltet oder gedrückt, d.h. gerafft, wird.

Eine Vorrichtung zur Erzielung dieser Faltung und Raffung nach dem genannten Verfahren weist vorzugsweise ein topfartiges, zylindrisches Teil auf, das in die Aufblasöffnung eines Gassackes einsetzbar ist, wobei die axiale Länge des zylindrischen Teils näherungsweise der Höhe des nach dem ersten Schritt gefalteten Gassackpaketes entspricht. Weiterhin ist ein Niederhalter vorgesehen, der den der Aufblasöffnung gegenüberliegenden Bereich des Gassackes auf den Boden des zylindrischen Aufnahmeteiles drückt und festhält. Weiterhin sind auf den gegenüberliegenden Seiten des Gassackes axial in Richtung auf den Gassack bewegliche, schalenartige Elemente vorgesehen, die mit unterschiedlichen Radien konzentrisch zueinander angeordnet sind, wobei die Radien der gegenüberliegenden Elemente jeweils unterschiedlich sind.

Weiterhin sind radiale Raffelemente vorgesehen, die zusammen mit dem gefalteten Gassack in eine Packvorrichtung einbringbar sind. In diese kann ebenfalls ein Generatorträger mit darin angeordnetem Gasgenerator eingebracht werden.

Die Packvorrichtung weist weiterhin eine Vorrichtung zum Eindrücken des gefalteten Gassackes in den Generatorträger auf.

Werden diesen Falt- Raff- und Verdichtungselementen bekannte Antriebe, z. B. Druckzylinder, zugeordnet, ist der Aufwand für den Antrieb erheblich.

Der Erfindung liegt die Aufgabe zugrunde, ein Verfahren und eine Vorrichtung zur rationellen Faltung, Raffung und Verdichtung eines Gassackes zu schaffen.

Erfindungsgemäß wird das entsprechend den kennzeichnenden Merkmalen der Ansprüche 1 und 9 erreicht.

Ein Verfahren zur Faltung des Gassackes ist erfindungegemäß durch die Merkmale des Anspruchs 1 charakterisiert. Hierbei wird der Gassack durch Streckung zunächst so vorgeformt, daß er in groben Zügen den Umfang erhält, den er im gefalteten Zustand aufweisen muß, um in einem Gehäuse verstaut werden zu können. Durch das anschließende Zusammendrücken, das z.B. durch Druckeinwirkung erfolgen kann, erhält der Gassack dann die Höhenabmessung, die für das Verstauen des gefalteten Gassackes erforderlich ist. Eine hinterschnittfreie Faltung wird bei diesem Verfahren ohne zusätzliche Faltelemente erreicht, wobei es sich bei dieser Faltung um eine chaotische Faltung handelt, d.h. die Falten bilden sich willkürlich.

In einer Ausführungsform ist vorgesehen, daß der ausgebreitete Gassack im Bereich seines Einblasmundes gehalten wird und in einen hülsenförmigen Formkörper gezogen wird, daß gleichzeitig ein innerer Stempel in den Gassack eingebracht wird und daß anschließend der Gassack mittels eines äußeren Stempels im hülsenförmigen Formkörper zusammengedrückt wird. Bei diesem Verfahren ist also der erste wesentliche Verfahrensschritt ein Ziehvorgang und der zweite wesentliche Verfahrenschritt ein Drückvorgang.

In einer anderen Ausführungsform ist vorgesehen, daß der ausgebreitete Gassack über einen Stempel in einen hülsenförmigen Formkörper gedrückt wird und dann in Richtung eines Endes der Hülse gedrückt wird. In dieser Ausführungsform werden also zwei Drückvorgänge durchgeführt. Im Unterschied zur vorhergehenden Ausführungsform des Verfahrens benötigt der ausgebreitete Gassack bei dieser Ausführungsform keine Halterung.

Bei der erstgenannten Ausführungsform des Verfahrens wird der ausgebreitete Gassack vorzugsweise von unten nach oben sowohl in den Formkörper gezogen als auch zusammengedrückt. Dabei wird der Gassack ohne vormontierten Gasgenerator im ausgebreiteten leeren Zustand am Einblasmund aufgenommen. Wenn der Gassgenerator bereits montiert ist, erfolgt die Aufnahme im ausgebreiteten leeren Zustand des Gassackes am Gasgenerator.

In einer weiteren Ausführungsform des Verfahrens ist vorgesehen, daß der ausgebreitete Gassack im Bereich seines Einblasmundes auf einem inneren Stempel gehalten wird, daß ein hülsenförmiger Formkörper über den seitlich des Stempels herabhängenden Gassack gestülpt wird und daß anschließend der Gassack mittels eines äußeren Stempels im hülsenförmigen Formkörper zusammengedrückt wird.

Eine Vorrichtung zur Faltung eines Gassackes ist durch die Merkmale des Anspruchs 9 gekennzeichnet. Danach sind ein Formkörper und ein innerer Stempel zur Bildung eines Raumes mit ringförmigem Querschnitt vorgesehen, weiterhin mindestens eine den Gassack streckende Vorrichtung sowie mindestens eine Vorrichtung für das Zusammendrücken des Gassackes im Formkörper.

In einer bevorzugten Ausführungsform ist dem Formkörper ein verschiebbarer Stempel mit kleinerem Querschnitt als der Innenquerschnitt des Formkörpers zugeordnet.

Als Formkörper ist vorzugsweise eine Hülse vorgesehen. Aber auch ein an einer Seite oder zwei Seiten offener Formkörper kann angewendet werden.

Zwischen dem verschiebbaren Stempel und dem Formkörper ist ein Hohlraum vorhanden, der bei Verwendung einer Hülse als Formkörper einen ringförmigem Querschnitt aufweist, in den der zu faltende Gassack eingebracht und zusammengedrückt wird.

In einer ersten Ausführungsform ist oberhalb der senkrecht angeordneten Hülse eine in diese einführbare Aufnahme für den Gassack vorgesehen und unterhalb der Hülse sind zwei in diese einführbare koaxiale Stempel vorgesehen. Dabei stellt der innere der koaxialen Stempel den Kern zur Erzielung eines ringförmigen Hohlraumes dar, während der äußere Stempel als Werkzeug für das Zusammendrücken des Gassackes vorgesehen ist.

Es ist zweckmäßig, daß die Innenkontur des Formkörpers der Außenkontur des gefalteten Gassackes entspricht, daß ein innerer Stempel mit einer Außenkontur vorgesehen ist, die der Außenkontur eines mit dem Gassack zu verbindenden Gasge nerators entspricht, und daß ein äußerer Stempel mit einer Außenkontur vorgesehen ist, die der Innenkontur des Formkörpers entspricht.

Als Aufnahme für den Gassack bzw. für den am Gassack befestigten Gasgenerator kann eine Spannzange oder ein Stab mit klappbaren Auslegern vorgesehen sein.

In einer weiteren Ausführungsform ist vorgesehen, daß dem als Hülse ausgebildeten Formkörper an einer Öffnungsseite zwei koaxial in die Hülse einführbare Stempel zugeordnet sind, wobei ein innerer Stempel die Außenkontur eines an den Gassack anzubringenden Gasgenerators aufweist und wobei ein äußerer Stempel eine Außenkontur aufweist, die der Innenkontur des Formkörpers entspricht, und daß an der anderen Öffnungsseite ein in den Formkörper einführbarer Stempel vorgesehen ist, dessen Außenkontur der Innenkontur der Hülse entspricht.

Auch diese Hülse ist vorzugsweise in senkrechter Richtung angeordnet, so daß die Öffnungen oben bzw. unten liegen. Dann sind die beiden koaxialen Stempel vorzugsweise oberhalb der Hülse und der andere Stempel unterhalb der Hülse angeordnet.

In einer weiteren Ausgestaltung der Vorrichtung ist vorgesehen, daß der Formkörper elastisch verformbar ist. Bei dieser Ausführung besteht der zusätzliche Vorteil, daß für unterschiedliche Querschnittsformen des gefalteten Gassacks, die durch unterschiedliche Gehäuseformen für verschiedenartige Airbags erforderlich sind, nur ein Formkörper erforderlich ist, der durch äußere Elemente in die erforderlich Form gedrückt werden kann.

In einer weiteren Ausführungsform der Vorrichtung ist ein innerer feststehender Stempel vorgesehen, an dessen einem Ende der Gassack im Bereich seines Einblasmundes aufbringbar ist. Weiterhin ist ein hülsenförmiger Formkörper vorgesehen, der über den inneren Stempel und den daran gehaltenen Gassack bewegbar ist, und es ist ein in den Raum zwischen dem inneren Stempel und dem Formkörper einbringbarer passender äußerer Stempel vorgesehen.

Der Formkörper ist bei dieser Ausführungsform vorzugsweise von oben über den inneren Stempel bewegbar und der äußere Stempel ist von unten in den Formkörper hineinbewegbar. Weiterhin ist gegenüber dem Aufnahmeende des inneren Stempels für den Gassack ein Haltestempel vorgesehen, der bezüglich des inneren Stempels in axialer Richtung bewegbar ist.

Die Erfindung soll in Ausführungsbeispielen anhand von Zeichnungen erläutert werden. Es zeigen:
- Fig. 1: den prinzipiellen Aufbau einer erfindungsgemäßen Vorrichtung;
- Fig. 2: eine Draufsicht auf den hülsenförmigen Formkörper nach Fig. 1;
- Fig. 3a, b: Die Aufnahme des ausgebreiteten Gassackes ohne und mit vormontiertem Gasgenerator;
- Fig. 4: die Vorformung des Gassackes im Formkörper;
- Fig. 5a, 5b: das Faltschema des Gassackes während des Zusammnendrückens und nach dem Zusammendrükken;
- Fig. 6 - 8: das Einbringen des gefalteten Gassackes in ein Gehäuse;
- Fig. 9 - 14: den Faltvorgang mittels einer zweiten Ausführungsform einer Vorrichtung;
- Fig. 15: das Faltschema des Gassackes nach dem Zusammendrücken mittels der zweiten Ausführung der Vorrichtung;
- Fig. 16: eine Ausführungsform der Vorrichtung mit feststehendem Stempel;
- Fig. 17: einen Querschnitt gemäß der Linie II - II der Fig. 16.

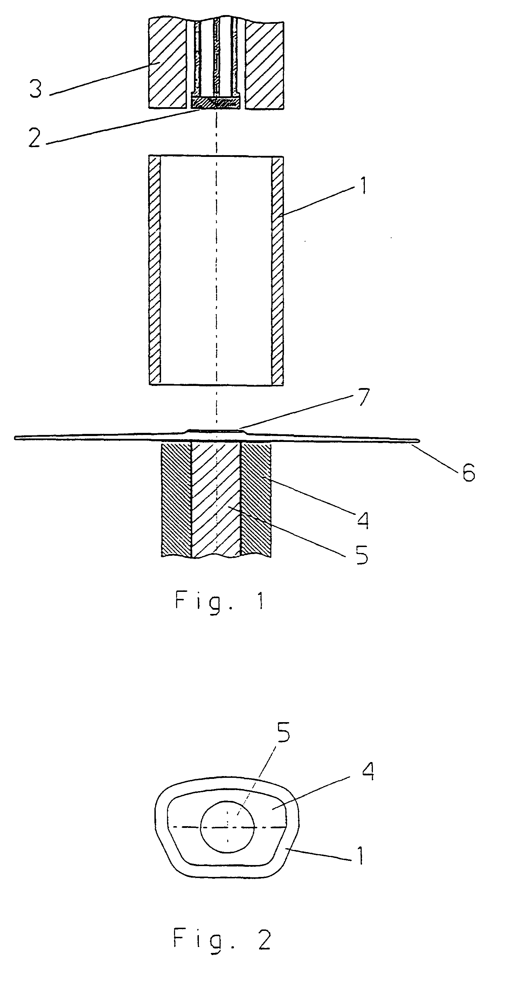

In einer ersten Ausführungsform, die in Fig. 1 dargestellt ist, weist die Vorrichtung eine Hülse 1 als Formköper auf. Oberhalb der Hülse 1 ist eine in die Hülse einführbare Spannzange 2 als Aufnahme für den ausgebreiteten Gassack 6 sowie ein Anschlag 3 im Bereich der Spannzange 2 vorgesehen. Unterhalb der Hülse sind zwei in diese einführbare koaxiale Stempel 4, 5 angeordnet. Die Außenkontur des äußeren Stempels 4 entspricht der Innenkontur der Hülse 1, während die Außenkontur des inneren Stempels der Außenkontur des Einblasmundes des Gassackes bzw. des mit diesem zu verbindenden Gasgenerators entspricht. Der zu faltende Gassack 6 wird vor Beginn des Faltvorganges auf den Stempeln 4, 5 abgelegt.

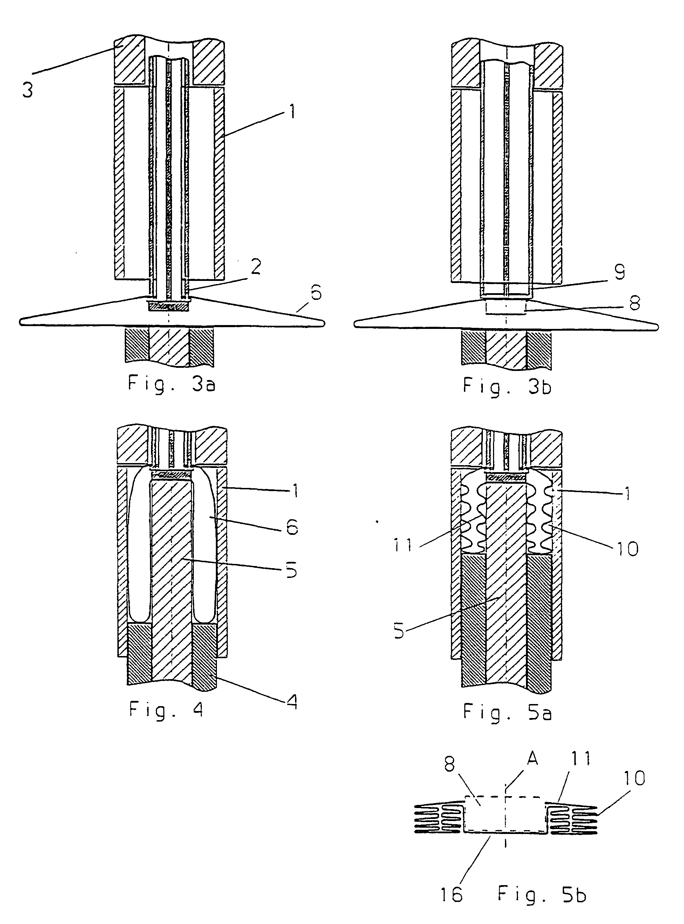

In einem ersten Verfahrensschritt wird der Anschlag 3 an die Hülse 1 herangefahren und die Spannzange 2 durch diese hindurchgeführt. In der Fig. 3a ist die Spannzange für die Aufnahme des Gassackes ohne Gasgenerator ausgebildet. Sie wird in den Einblasmund 7 des Gassackes 6 eingeführt und anschließend gespreizt. In der Fig. 3b ist der Gassack 6 bereits mit einem Gasgenerator 8 versehen. Die Aufnahme des Gasackes erfolgt in diesem Fall mittels einer gegenüber der Fig. 3a modifizierten Spannzange 9 am Gasgenerator 8. Die weitere Beschreibung des Verfahrens erfolgt unter Verwendung der Spannzange 2.

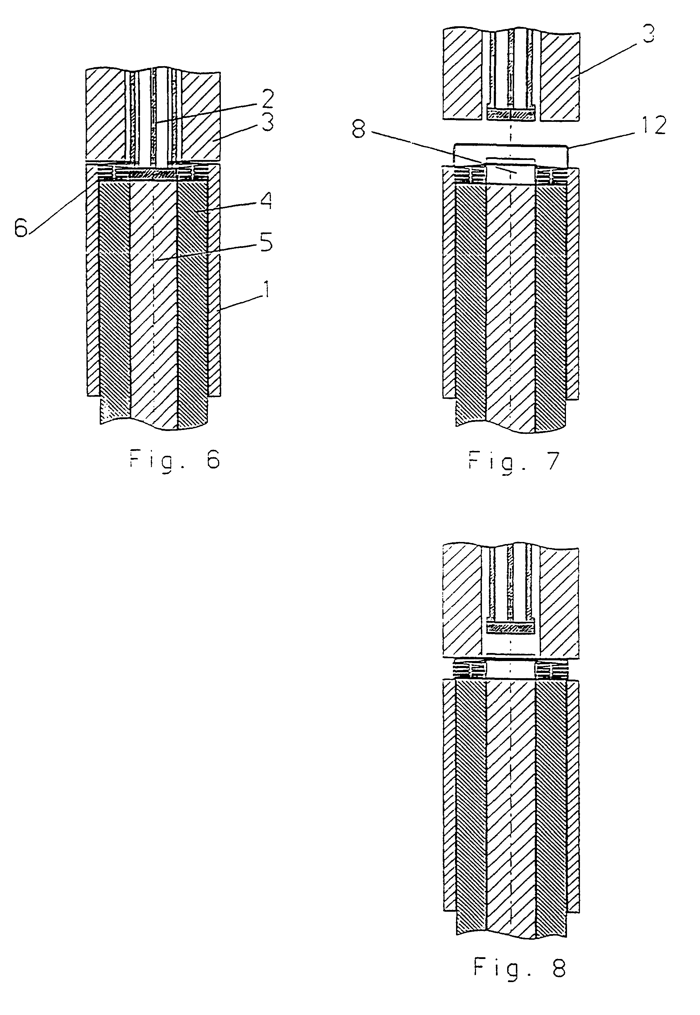

Mittels der Spannzange 2 wird der Gassack 6 in die Hülse 1 gezogen, wobei gleichzeitig der innere Stempel 5 nach oben gedrückt wird, so daß der Gassack 6 innerhalb eines Ringraumes vorgeformt wird, wie es aus Fig. 4 ersichtlich ist. Anschließend wird der äußere Stempel 4 nach oben gedrückt, wobei der Gassack innerhalb des Ringraumes zwichen dem inneren Stempel 5 und der Hülse 1 nach oben gedrückt wird. In der Fig. 5a ist ein dabei erreichtes Zwischenstadium der Faltung dargestellt. Es ist erkennbar, daß eine Doppelfaltung erfolgt, da sich der Gassack sowohl an der Hülse 1 in Falten 10 als auch am Stempel 5 in Falten 11 legt. In der Fig. 5b ist das Endstadium der Faltung dargestellt. Es ist erkennbar, daß die Faltung hinterschnittfrei erfolgt, was für eine vollständige Entfaltung wesentlich ist. Andererseits erfolgt aber auch keine schlagartige Entfaltung des Gassackes nach vorn in Richtung des Insassen, da sich nach der Zündung des Gasgenerators zunächst die inneren Falten 11 nach vorn entfalten und anschließend erst die äußeren Falten 10.

Nach Abschluß der Faltvorganges befinden sich beide Stempel 4, 5 in einer oberen Stellung (Fig. 6), in der sie noch unterhalb der Oberkante der Hülse 1 liegen. Nunmehr wird die Spannzange 2 entspannt und aus dem Einblasmund des Gassackes gezogen. Weiterhin wird der Anschlag 3 angehoben und anschließend der Gasgenerator 8 mit dem Gassack verbunden sowie ein Gehäuse 12 auf die Oberkante der Hülse 1 aufgelegt (Fig. 7). Das Gehäuse wird mittels des Anschlages 3 gehalten und mittels der Stempel 4, 5 wird der Gassack in das Gehäuse gedrückt (Fig. 8).

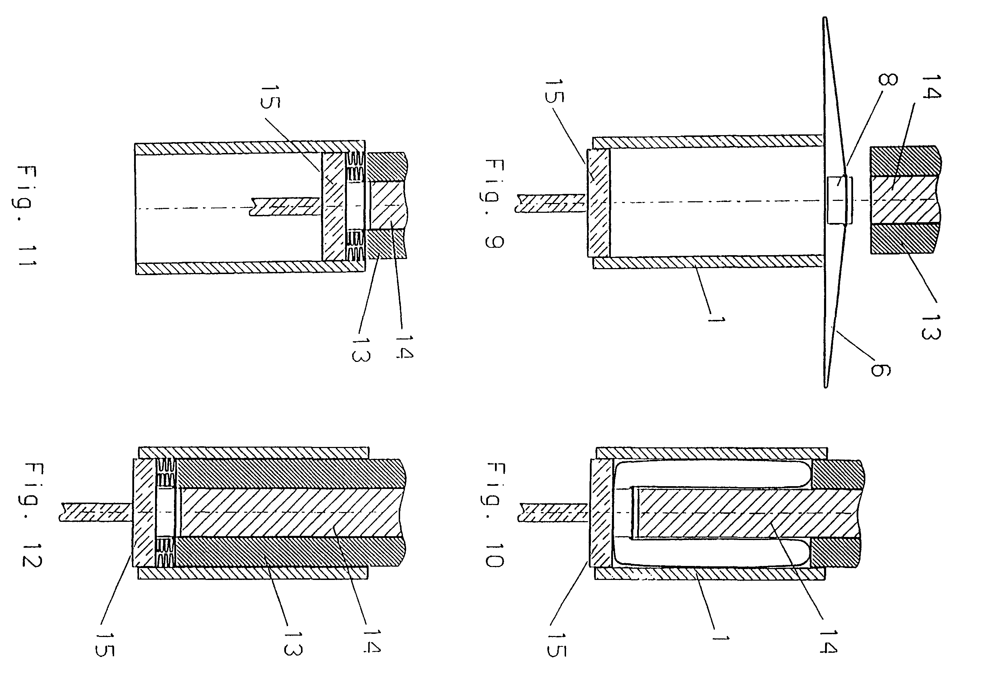

Eine weitere Ausführungsform der Vorrichtung und ein damit verbundener modifizierter Verfahrensablauf sind in den Figuren 9 bis 14 dargestellt. Diese Vorrichtung weist ebenfalls eine Hülse 1 auf. Oberhalb der Hülse sind ein äußerer Stempel 13 und ein innerer Stempel 14 angeordnet. Die Kontur des äußeren Stempels 13 entspricht der Innenkontur der Hülse 1 und die Kontur des inneren Stempels 14 entspricht der Kontur des Einblasmundes bzw. des Gasgenerators 8. An der unteren Öffnung der Hülse 1 ist ein Stempel 15 vorgesehen, dessen Kontur der Innenkontur der Hülse 1 entspricht.

Der auf der Hülse 1 liegende Gassack 6 wird zunächst mittels des inneren Stempels 14 in die Hülse 1 gedrückt, wobei die Hülse 1 unten durch den Stempel 15 abgeschlossen ist. Dadurch wird der Gassack wie im vorhergehenden Ausführungsbeispiel in einem Raum mit ringförmigem Querschnitt in Richtung der Längsachse der Hülse vorgeformt.

Die Faltung des Gassackes kann nun in zwei unterschiedlichen Varianten erfolgen. Gemäß der Fig. 11 wird der Gassack mittels des Stempels 15 nach oben gegen den Stempel 13 gedrückt, wobei gleichzeitig der Stempel 14 mit nach oben verschoben wird.

Bei der Variante der Fig. 12 bleiben die Stempel 14 und 15 in ihrer unteren Lage und der Gassack wird mittels des äußeren Stempels 13 zusammengedrückt und dabei gefaltet.

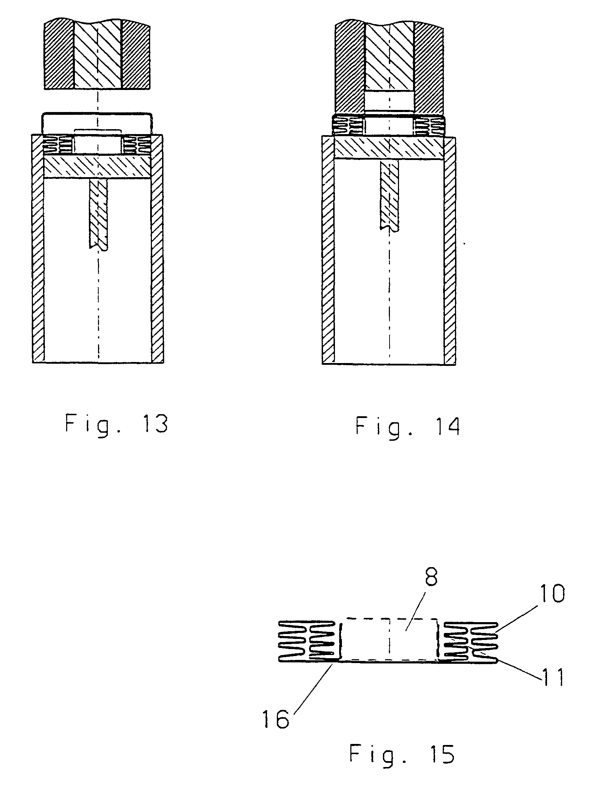

In beiden Fällen wird wie im vorigen Ausführungsbeispiel ein Doppelfaltung erzielt, wobei lediglich die glatte Lage 16, die auf dem Gasgenerator aufliegt, in die äußeren Falten 10 übergeht, während sie beim vorigen Ausführungsbeispiel, wie aus Fig. 5b ersichtlich ist, in die inneren Falten 11 übergeht. Somit werden bei dem Faltschema der Fig. 15 zunächst die äußeren Falten 10 entfaltet, wobei die gleichen Vorteile bestehen wie bei dem Faltschema der Fig. 5b.

Nach Abschluß der Faltung wird ähnlich wie im vorigen Ausführungsbeispiel das Gehäuse aufgelegt und der Gassack mittels des Stempels 15 in das Gehäuse gedrückt (Figuren 13 und 14).

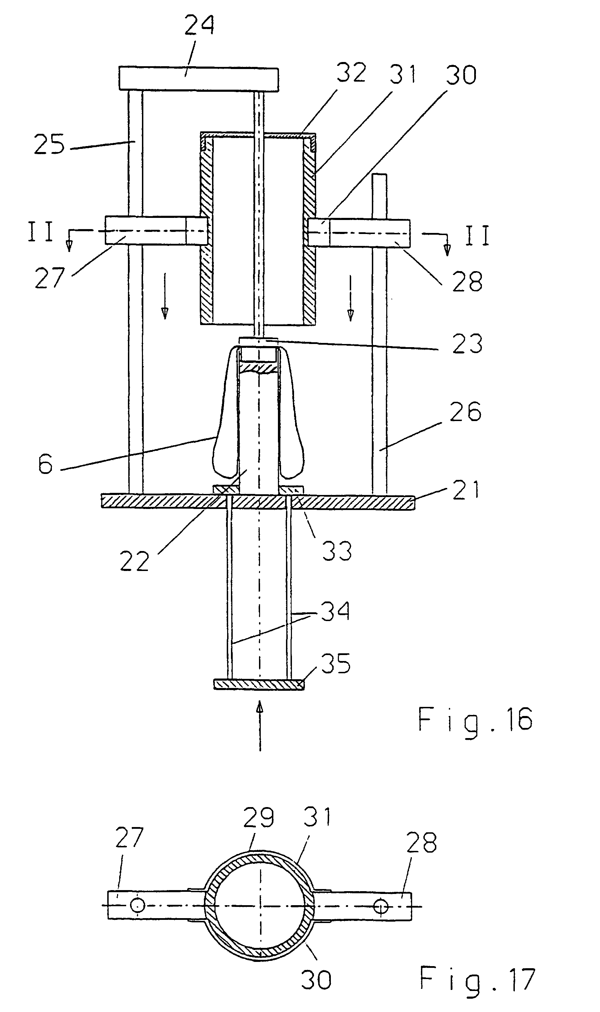

Beim Ausführungsbeispiel der Fig. 16 ist auf einem Arbeitstisch 21 der Vorrichtung ein feststehender innerer Stempel 22 vorgesehen, auf dessen oberer Stirnfläche der zu faltende Gassack 6 mit seinem Einblasmund aufliegt. Über der Stirnfläche und dem Gassack ist ein Haltestempel 23 vorgesehen, der an einer Traverse 24 befestigt ist, die über eine Führungssäule 25 mit dem Arbeitstisch verbunden ist. Der Haltestempel 23 ist geringfügig auf- und abbewegbar, so daß der Gassack 6 auf den inneren Stempel 22 gelegt werden kann und anschließend durch Heranbringen des Haltestempels fixiert werden kann.

Weiterhin sind Arme 27 und 28 vorgesehen, die auf der Führungssäule 25 bzw. auf einer weiteren Führungssäule 26 verschiebbar sind. An diesen Armen ist mittels Schellen 29, 30 ein hülsenförmiger Formkörper 31 befestigt, der konzentrisch zum Haltestempel 23 positioniert ist und oben mittels eines aufgeschraubten Deckels 32 verschlossen ist. Der Formkörper ist aus der in der Fig. 16 dargestellten Position nach unten bewegbar.

Konzentrisch zum inneren Stempel 22 ist ein Ring 33 als äußerer Stempel angeordnet. Dieser ist an vier durch den Arbeitstisch 21 ragenden Stäben 34 befestigt, die in einer Platte 35 gehalten sind. Der Ring 33 ist aus der in Fig. 1 dargestellten Position nach oben verschiebbar.

Vor dem Einbringen eines Gassackes in die Vorrichtung sind der innere Stempel 22 und der Haltestempel 23 durch Aufwärtsbewegung des letzteren soweit voneinander entfernt, daß ein Gassack im leeren, ausgebreiteten Zustand auf den inneren Stempel 22 aufgelegt werden kann. Nach dem Auflegen des Gassackes wird der Haltestempel nach unten an den Gassack 6 bewegt, um diesen zu fixieren.

Der Gassack hängt mangels einer seitlichen Unterstützung am inneren Stempel herunter, wie es in Fig. 16 dargestellt ist. In einem nächsten Schritt wird der Formkörper 31 nach unten bewegt, bis der Deckel 32 im Bereich der Einspannstelle des Gassackes an diesem anliegt. Nunmehr befindet sich der Gassack 6 zwischen dem inneren Stempel 22 und dem Formkörper 31.

Im nächsten Schritt wird der Ring 33 nach oben bewegt, wodurch der Gassack 6 gefaltet wird. Nach Beendigung des Faltvorganges werden zunächst der Formkörper 31 und anschließend der Haltestempel 23 nach oben bewegt, bis über dem gefalteten Gassack ausreichend Platz für das Aufsetzen eines nicht dargestellten Gehäuses vorhanden ist, in das der gefaltete Gassack von unten mittels des Ringes 33 eingedrückt wird.

## Patentansprüche

1. Verfahren zur Faltung eines einen Einblasmund aufweisenden Gassackes (6) für ein Airbagmodul,
**dadurch gekennzeichnet,**
**daß** der ausgebreitete Gassack (6) in einem durch einen Formkörper (1, 31) und einen inneren Stempel (5, 14, 22) definierten Raum mit ringförmigem Querschnitt ringförmig vorgeformt wird, so daß sich der Gassack (6) in Richtung der durch den Einblasmund des Gassackes verlaufenden Längsachse des Formkörpers (1, 31) erstreckt, und daß anschließend der Gassack (6) innerhalb des Ringraumes zwischen dem inneren Stempel (5, 14, 22) und dem Formkörper (1, 31) zusammengedrückt wird.

2. Verfahren nach Anspruch 1, **dadurch gekennzeichnet, daß** der Gassack innerhalb des Raumes mit ringförmigem Querschnitt in Richtung der Längsachse des Formkörpers zusammengerafft wird.

3. Verfahren nach Anspruch 1 oder 2, **dadurch gekennzeichnet, daß** der ausgebreitete Gassack im Bereich seines Einblasmundes gehalten wird und in einen hülsenförmigen Formkörper gezogen wird, daß gleichzeitig ein innerer Stempel in den Gassack eingebracht wird und daß anschließend der Gassack mittels eines äußeren Stempels im hülsenförmigen Formkörper zusanmengedrückt wird.

4. Verfahren nach Anspruch 1 oder 2 , **dadurch gekennzeichnet, daß** der ausgebreitete Gassack über einen Stempel in einen hülsenförmigen Formkörper gedrückt wird und in Richtung eines Endes der Hülse zusammengedrückt wird.

5. Verfahren nach mindestens einem der vorhergehenden Ansprüche 1 bis 3, **dadurch gekennzeichnet, daß** der ausgebreitete Gassack von unten nach oben sowohl in den Formkörper eingezogen als auch zusammengedrückt wird.

6. Verfahren nach Anspruch 1 oder 2, **dadurch gekennzeichnet, daß** der ausgebreitete Gassack im Bereich seines Einblasmundes auf einem inneren Stempel gehalten wird, daß ein hülsenförmiger Formkörper über den seitlich des Stempels herabhängenden Gassack gestülpt wird und daß anschließend der Gassack mittels eines äußeren Stempels im hülsenförmigen Formkörper zusammengedrückt wird.

7. Verfahren nach mindestens einem der vorhergehenden Ansprüche, **dadurch gekennzeichnet, daß** der Gassack ohne vormontierten Gasgenerator im ausgebreiteten leeren Zustand am Einblasmund aufgenommen wird.

8. Verfahren nach mindestens einem der Ansprüche 1 bis 3, **dadurch gekennzeichnet, daß** bei einem Gassack mit vorrrontiertem Gasgenerator die Aufnahme im ausgebreiteten Zustand des Gassackes am Gasgenerator erfolgt.

9. Vorrichtung zur Faltung eines Gassackes (6), insbesondere zur Durchführung des Verfahrens nach mindestens einen der Ansprüche 1 bis 8,
**dadurch gekennzeichnet,**
**daß** eine Vorrichtung zum ringförmigen Vorformen des ausgebreiteten Gassackes (6) vorgesehen ist, die einen Formkörper (1, 31) und einen inneren Stempel (5, 14, 22) aufweist, die zusammen einen Raum mit ringförmigem Querschnitt definieren, in dem der Gassack (6) in Richtung der Längsachse des Formkörpers (1, 31) erstreckbar ist, und daß mindestens eine Vorrichtung (3, 4, 13, 15, 32, 33, 34, 35) für das Zusammendrücken des Gassakkes (6) in dem Ringraum zwischen dem inneren Stempel (5, 14, 22) und dem Formkörper (1) vorgesehen ist.

10. Vorrichtung nach Anspruch 9, **dadurch gekennzeichnet, daß** dem Formkörper (1) ein verschiebbarer Stempel (5, 14) mit kleinerem Querschnitt als der Innenquerschnitt des Formkörpers zugeordnet ist.

11. Vorrichtung nach Anspruch 9 oder 10, **dadurch gekennzeichnet, daß** als Formkörper eine Hülse (1) vorgesehen ist.

12. Vorrichtung nach mindestens einem der Ansprüche 9 bis 11, **dadurch gekennzeichnet, daß** oberhalb der senkrecht angeordneten Hülse (1) eine in diese einführbare Aufnahme (2) für den Gassack (6) vorgesehen ist und daß unterhalb der Hülse (1) zwei in diese einführbare koaxiale Stempel (4, 5) vorgesehen sind.

13. Vorrichtung nach mindestens einem der Ansprüche 9 bis 12, **dadurch gekennzeichnet, daß** die Innenkontur des Formkörpers (1) der Außenkontur des gefalteten Gassackes (6) entspricht und daß ein innerer Stempel (5) mit einer Außenkontur vorgesehen ist, die der Außenkontur eines mit dem Gassack zu verbindendenden Gasgenerators (8) entspricht, und daß ein äußerer Stempel (4) mit einer Außenkontur vorgesehen ist, die der Innenkontur des Formkörpers (1) entspricht.

14. Vorrichtung nach mindestens einem der vorhergehenden Ansprüche 9 bis 13, **dadurch gekennzeichnet, daß** als Aufnahme für den Gassack (6) bzw. für den am Gassack befestigten Gasgenerators (8) eine Spannzange (2, 9) oder ein Stab mit klappbaren Auslegern vorgesehen ist.

15. Vorrichtung nach mindestens einem der vorhergehenden Ansprüche 9 bis 14, **dadurch gekennzeichnet, daß** dem als Hülse (1) ausgebildeten Formkörper an einer Öffnungsseite zwei koaxial in diesen einführbare Stempel (14, 15) zugeordnet sind, wobei ein innerer Stempel (14) die Außenkontur eines an den Gassack anzubringenden Gasgenerators (8)aufweist und wobei ein äußerer Stempel (13) eine Außenkontur aufweist, die der Innenkontur der Hülse (1) entspricht, und daß an der anderen Öffnungsseite ein in die Hülse einführbarer Stempel (15) vorgesehen ist, dessen Außenkontur der Innenkontur der Hülse entspricht.

16. Vorrichtung nach Anspruch 15, **dadurch gekennzeichnet, daß** die Hülse (1) in senkrechter Richtung angeordnet ist und daß die beiden koaxialen Stempel (13, 14) oberhalb der Hülse (1) angeordnet sind und der andere Stempel (15) unterhalb der Hülse angeordnet ist.

17. Vorrichtung nach mindestens einem der vorhergehenden Ansprüche, **dadurch gekennzeichnet, daß** der Formkörper elastisch verformbar ist.

18. Vorrichtung nach Anspruch 9, **dadurch gekennzeichnet, daß** ein innerer feststehender Stempel (22) vorgesehen ist, an dessen einem Ende der Gassack (6) im Bereich seines Einblasmundes aufbringbar ist, daß ein hülsenförmiger Formkörper (31) vorgesehen ist, der über den inneren Stempel und den daran gehaltenen Gassack bewegbar ist, und daß ein in den Raum zwischen dem inneren Stempel (22) und dem Formkörper (31) einbringbarer passender äußerer Stempel (33) vorgesehen ist.

19. Vorrichtung nach Anspruch 18, **dadurch gekennzeichnet, daß** der Formkörper (31) von oben über den inneren Stempel (22) bewegbar ist und -daß der äußere Stempel (33) von unten in den Formkörper (31) hineinbewegbar ist.

20. Vorrichtung nach Anspruch 18 oder 19, **dadurch gekennzeichnet, daß** gegenüber dem Aufnahmeende des inneren Stempels (22) für den Gassack (6) ein Haltestempel (23) vorgesehen ist, der bezüglich des inneren Stempels (22) in axialer Richtung bewegbar ist.

## Claims

1. Method for folding an airbag with a filling mouth for an airbag module
**characterised in that**
the spread out airbag (6) is preformed like a ring in a space with ring-like cross-section defined by a shaping body (1, 31) and an inner ram (5, 14, 22), so that the airbag (6) extends in the direction of the longitudinal axis of the shaping body (1, 31) extending through the mouth of the airbag, and that subsequently the airbag is pressed together within the ring space between the inner ram (5,14,22) and the shaping body (1,31).

2. Method according to Claim 1, **characterised in that** the airbag is gathered together inside the space with ring-like cross-section in the direction of the longitudinal axis of the shaping body.

3. Method according to claim 1 or 2 **characterised in that** the spread out airbag is held in the area of its filling mouth and is drawn into a sleeve-like shaping body, that at the same time an inner ram is introduced into the airbag and that then the airbag is compressed in the sleeve like shaping body by means of an outer ram.

4. Method according to claims 1 or 2 **characterised in that** the spread out empty airbag is pressed into a sleeve like shaping body through a ram and is compressed in the direction of one end of the sleeve.

5. Method according to at least one of the preceding claims 1 to 3, **characterised in that** the spread out airbag is both drawn into the shaping body and compressed therein from bottom upwards.

6. Method according to claim 1 or 2 **characterised in that** the spread out airbag is held on an inner ram in the area of its filling mouth, that a sleeve like shaping body is inserted over the airbag hanging down at the side of the ram and that then the airbag is compressed in the sleeve like shaping body by an outer ram.

7. Method according to at least one of the preceding claims, **characterised in that** the airbag without prefitted gas generator is housed in the spread out empty state by its filling mouth.

8. Method according to at least one of claims 1 to 3 **characterised in that** in the case of an airbag with prefitted gas generator the airbag is held in the spread out state on the gas generator.

9. Apparatus for folding an airbag (6), in particular for carrying out the method according to at least one of claims 1 to 8
**characterised in that**
an apparatus for ring-like pre-forming of the spread out airbag (6) is provided, which has a shaping body (1, 31) and an inner ram (5, 14, 22), which together define a space with ring-like cross-section, in which the airbag (6) is expanded in the direction of the longitudinal axis of the shaping body (1,31), and that at least one apparatus (3, 4, 13, 15, 32, 33, 34, 35) is provided for the pressing together of the airbag (6) in the ring-like space between the inner ram (5, 14, 22) and the shaping body (1).

10. Device according to claim 9 **characterised in that** the shaping body (1) is associated with a displaceable ram (5,14) with smaller cross-section than the inner cross-section of the shaping body.

11. Device according to claim 9 or 10 **characterised in that** a sleeve (1) is provided as shaping body.

12. Device according to at least one of claims 9 to 11 **characterised in that** a holder (2) for the airbag (6) is provided above the vertically mounted sleeve (1) and can be inserted therein and that two coaxial rams (4,5) are provided underneath the sleeve (1) and can be inserted therein.

13. Device according to one or more of claims 9 to 12 **characterised in that** the inner contour of the shaping body (1) corresponds to the outer contour of the folded airbag (6) and that an inner ram (5) is provided with an outer contour which corresponds to the outer contour of a gas generator (8) which is to be connected to the airbag and that an outer ram (4) is provided with an outer contour which corresponds to the inner contour of the shaping body (1).

14. Device according to at least one of the preceding claims 9 to 13 **characterised in that** clamping tongs (2,9) or a rod with foldable extension arms are provided as a holder for the airbag (6) or for the gas generator (8) fixed on the airbag.

15. Device according to one or more of the preceding claims 9 to 14 **characterised in that** the shaping body formed as a sleeve (1) is associated on one opening side with two rams (14,15) which can be inserted coaxially therein wherein one inner ram (14) has the outer contour of a gas generator (8) to be attached to the airbag and wherein an outer ram (13) has an outer contour which corresponds to the inner contour of the sleeve (1) and that on the other opening side a ram (15) is provided which can be inserted in the sleeve and whose outer contour corresponds to the inner contour of the sleeve.

16. Device according to claim 15 **characterised in that** the sleeve (1) is mounted in the vertical direction and that the two coaxial rams (13, 14) are mounted above the sleeve (1) and the other ram (15) is mounted underneath the sleeve.

17. Device according to at least one of the preceding claims, **characterised in that** the shaping body is elastically deformable.

18. Device according to claim 9 **characterised in that** an inner fixed ram (22) is provided whereby the airbag (6) can be attached at one end thereof through its filling mouth area, that a sleeve like shaping body (31) is provided which can be moved over the inner ram and the airbag held thereon, and that an outer ram (33) is provided which can be introduced with tight fit into the space between the inner ram (22) and shaping body (31).

19. Device according to claim 18 **characterised in that** the shaping body (31) can be moved from above over the inner ram (22) and that the outer ram (33) can be moved into the shaping body (31) from below.

20. Device according to claim 18 or 19 **characterised in that** a retaining ram (23) is provided opposite the socket end of the inner ram (22) for the airbag (6) and is movable axially relative to the inner ram (22).

## Revendications

1. Procédé de pliage d'un sac à gaz (6) présentant une embouchure d'insufflation pour un module d'airbag,
**caractérisé en ce que**
le sac à gaz étalé (6) est préformé en forme annulaire dans un espace défini par un corps de formage (1, 31) et par un poinçon intérieur (5, 14, 22) et présentant une section annulaire, de sorte que le sac à gaz (6) s'étend dans la direction de l'axe longitudinal du corps de formage (1, 31), axe qui s'étend à travers l'embouchure d'insufflation du sac à gaz, et **en ce qu'**ensuite le sac à gaz (6) est comprimé à l'intérieur de l'espace annulaire entre le poinçon intérieur (5, 14, 22) et le corps de formage (1, 31).

2. Procédé selon la revendication 1, **caractérisé en ce que** le sac à gaz est drapé en direction de l'axe longitudinal du corps de formage à l'intérieur de l'espace de section annulaire.

3. Procédé selon l'une ou l'autre des revendications 1 et 2, **caractérisé en ce que** le sac à gaz étalé est retenu dans la zone de son embouchure d'insufflation et est tiré dans un corps de formage en forme de douille, **en ce qu'**un poinçon intérieur est introduit simultanément dans le sac à gaz, et **en ce qu'**ensuite le sac à gaz est comprimé dans le corps de formage en forme de douille au moyen d'un poinçon extérieur.

4. Procédé selon l'une ou l'autre des revendications 1 et 2, **caractérisé en ce que** le sac à gaz étalé est poussé sur un poinçon dans un corps de formage en forme de douille et comprimé en direction d'une extrémité de la douille.

5. Procédé selon l'une au moins des revendications 1 à 3, **caractérisé en ce que** le sac à gaz étalé est à la fois tiré dans le corps de formage et comprimé de bas en haut.

6. Procédé selon l'une ou l'autre des revendications 1 et 2, **caractérisé en ce que** le sac à gaz étalé est retenu sur un poinçon intérieur dans la zone de son embouchure d'insufflation, **en ce qu'**un corps de formage en forme de douille est enfilé par-dessus le sac à gaz qui pend vers le bas latéralement à côté du poinçon, et **en ce qu'**ensuite, le sac à gaz est comprimé dans le corps de formage en forme de douille au moyen d'un poinçon extérieur.

7. Procédé selon l'une au moins des revendications précédentes, **caractérisé en ce que** le sac à gaz est saisi au niveau de l'embouchure d'insufflation dans l'état étalé à vide sans générateur de gaz pré-monté.

8. Procédé selon l'une au moins des revendications 1 à 3, **caractérisé en ce que** dans un sac à gaz comprenant un générateur de gaz pré-monté, la saisie s'effectue au niveau du générateur de gaz dans l'état étalé du sac à gaz.

9. Dispositif de pliage d'un sac à gaz (6), en particulier pour mettre en oeuvre le procédé selon l'une au moins des revendications 1 à 8, **caractérisé en ce qu'**il est prévu un dispositif pour le préformage annulaire du sac à gaz étalé (6), qui comprend un corps de formage (1, 31) et un poinçon intérieur (5, 14, 22) qui définissent conjointement un espace de section annulaire dans lequel le sac à gaz (6) peut s'étendre dans la direction de l'axe longitudinal du corps de formage (1, 31), et **en ce qu'**il est prévu au moins un dispositif (3, 4, 13, 15, 32, 33, 34, 35) pour la compression du sac à gaz (6) dans l'espace annulaire entre le poinçon intérieur (5, 14, 22) et le corps de formage (1, 31).

10. Dispositif selon la revendication 9, **caractérisé en ce qu'**au corps de formage (1) est associé un poinçon mobile (5, 14) de section inférieure à la section intérieure du corps de formage.

11. Dispositif selon l'une ou l'autre des revendications 9 et 10, **caractérisé en ce qu'**il est prévu une douille (1) à titre de corps de formage.

12. Dispositif selon l'une au moins des revendications 9 à 11, **caractérisé en ce qu'**il est prévu, au-dessus de la douille (1) agencée verticalement, un organe de saisie (2) susceptible d'être introduit dans celle-ci et destiné au sac à gaz (6), et **en ce qu'**il est prévu, au-dessous de la douille (1), deux poinçons coaxiaux (4, 5) susceptibles d'être introduits dans celle-ci.

13. Dispositif selon l'une au moins des revendications 9 à 12, **caractérisé en ce que** le contour intérieur du corps de formage (1) correspond au contour extérieur du sac à gaz plié (6), et **en ce qu'**il est prévu un poinçon intérieur (5) présentant un contour extérieur qui correspond au contour extérieur d'un générateur de gaz (8) à relier au sac à gaz, et **en ce qu'**il est prévu un poinçon extérieur (4) présentant un contour extérieur qui correspond au contour intérieur du corps de formage (1).

14. Dispositif selon l'une au moins des revendications 9 à 13, **caractérisé en ce qu'**il est prévu, à titre d'organe de saisie pour le sac à gaz (6) ou pour le générateur de gaz (8) fixé sur le sac à gaz, une pince de serrage (2, 9) ou une barre à bras rabattables.

15. Dispositif selon l'une au moins des revendications 9 à 14, **caractérisé en ce qu'**au corps de formage réalisé sous forme de douille (1) sont associés, sur un côté d'ouverture, deux poinçons (14, 15) susceptibles . d'être introduits coaxialement dans celui-ci, un poinçon intérieur (14) présentant le contour extérieur d'un générateur de gaz (8) rapporter sur le sac à gaz et un poinçon extérieur (13) présentant un contour extérieur qui correspond au contour intérieur de la douille (1), et **en ce qu'**il est prévu, sur l'autre côté d'ouverture, un poinçon (15) susceptible d'être introduit dans la douille et dont le contour extérieur correspond au contour intérieur de la douille.

16. Dispositif selon la revendication 15, **caractérisé en ce que** la douille (1) est agencée en direction verticale, et **en ce que** les deux poinçons coaxiaux (13, 14) sont agencés au-dessus de la douille (1) et l'autre poinçon (15) est agencé au-dessous de la douille.

17. Dispositif selon l'une au moins des revendications précédentes, **caractérisé en ce que** le corps de formage est élastiquement déformable.

18. Dispositif selon la revendication 9, **caractérisé en ce qu'**il est prévu un poinçon intérieur stationnaire (22) à une extrémité duquel peut être amené le sac à gaz (6) dans la zone de son embouchure d'insufflation, **en ce qu'**il est prévu un corps de formage (31) en forme de douille qui est mobile par-dessus le poinçon intérieur et le sac à gaz retenu sur celui-ci, et **en ce qu'**il est prévu un poinçon extérieur (33) adapté susceptible d'être introduit dans l'espace entre le poinçon intérieur (22) et le corps de formage (31).

19. Dispositif selon la revendication 18, **caractérisé en ce que** le corps de formage (31) est mobile depuis le haut par-dessus le poinçon intérieur (22), et **en ce que** le poinçon extérieur (33) est mobile depuis le bas jusque dans le corps de formage (31).

20. Dispositif selon l'une ou l'autre des revendications 18 et 19, **caractérisé en ce qu'**il est prévu, à l'opposé de l'extrémité de réception du poinçon intérieur (22) pour le sac à gaz (6), un poinçon de retenue (23) qui est mobile en direction axiale par rapport au poinçon intérieur (22).
